# EUROPEAN PATENT SPECIFICATION

(11) **EP 3 573 388 B1**
(45) Date of publication and mention of the grant of the patent: **05.05.2021**
(21) Application number: 18776633.2
(22) Date of filing: 23.03.2018
(51) Int. Cl.: H04W 56/00, H04L 5/00, H04W 72/04

(54) **METHOD AND DEVICE FOR TRANSMITTING SIGNAL**
VERFAHREN UND VORRICHTUNG ZUR ÜBERTRAGUNG EINES SIGNALS
PROCÉDÉ ET DISPOSITIF D'ÉMISSION DE SIGNAL

(30) Priority: 31.03.2017 CN 201710205838
(43) Date of publication of application: 27.11.2019
(73) Proprietor: Huawei Technologies Co., Ltd., Longgang District Shenzhen, Guangdong 518129 (CN)
(72) Inventor: SHI, Hongzhe, Shenzhen Guangdong 518129 (CN); LIU, Jin, Shenzhen Guangdong 518129 (CN); LUO, Jun, Shenzhen Guangdong 518129 (CN)
(74) Representative: Maiwald Patent- und Rechtsanwaltsgesellschaft mbH
(86) International application number: PCT/CN2018/080274
(87) International publication number: WO 2018/177216

(56) References cited:
- WO-A1-2017/018966
- WO-A1-2017/044144
- CN-A- 105 307 260
- CN-A- 106 537 825
- US-A1- 2017 034 798
- NTT DOCOMO INC: "Discussion and evaluation on NR-PSS/SSS design", 3GPP DRAFT; R1-1612721_DISCUSSION AND EVALUATION ON NR-PSSSSS DESIGN_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Reno, USA; 20161114 - 20161118 13 November 2016 (2016-11-13), XP051176664, Retrieved from the Internet: URL:http://www.3gpp.org/ftp/Meetings_3GPP_ SYNC/RAN1/Docs/ [retrieved on 2016-11-13]
- NTT DOCOMO ET AL: "Study on New Radio Access Technology", 3GPP DRAFT; RP-162201 SR_FS_NR_NEWRAT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Vienna, Austria; 20161205 - 20161208 29 November 2016 (2016-11-29), XP051663894, Retrieved from the Internet: URL:http://www.3gpp.org/ftp/tsg%5Fran/TSG% 5FRAN/TSGR%5F74/Docs/RP%2D162201%2Ezip [retrieved on 2016-11-29]
- "3rd Generation Partnership Project; Technical Specification Group Radio Access Network; Study on New Radio (NR) access technology (Release 14)", 3GPP STANDARD ; TECHNICAL SPECIFICATION ; 3GPP TR 38.912, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG RAN, no. V14.0.0, 24 March 2017 (2017-03-24), pages 1-74, XP051295707, [retrieved on 2017-03-24]

## Description

### TECHNICAL FIELD

This application relates to the communications field, and more specifically, to a signal transmission method and apparatus.

### BACKGROUND

A time division multiplexing (Time Division Multiplexing, TDM) mode is used for a primary synchronization signal (Primary Synchronization Signal, PSS) and a secondary synchronization signal (Secondary Synchronization Signal, SSS) of synchronization signals in long term evolution (Long Term Evolution, LTE). Both the PSS and the SSS occupy an entire synchronization bandwidth.

The article by NTT DOCOMO INC, titled "Discussion and evaluation on NR-PSS/SSS design", vol. RAN WG1, no. Reno, USA; 20161114 - 20161118, (20161113), 3GPP DRAFT; R1-1612721 DISCUSSION AND EVALUATION ON NR-PSSSSS DESIGN_FINAL, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, describes discussion and evaluation on NR-PSS/SSS design.

The article by NTT DOCOMO ET AL, titled "Study on New Radio Access Technology", vol. TSG RAN, no. Vienna, Austria; 20161205 - 20161208, (20161129), 3GPP DRAFT; RP-162201 SR_FS_NR_NEWRAT, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, refers to a study on new radio access technology.

The article by the 3rd Generation Partnership Project; titled "Technical Specification Group Radio Access Network; Study on New Radio (NR) access technology (Release 14)", 3GPP STANDARD; TECHNICAL SPECIFICATION; 3GPP TR 38.912, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, (20170324), vol. TSG RAN, no. V14.0.0, pages 1 - 74, describes 3rd generation partnership project; technical specification group radio access network; study on new radio access technology.

In new radio (New Radio, NR) of 5th generation communication, a synchronization service needs to meet different service requirements.

For example, in beam-based access, the synchronization signals may be repeatedly sent for a plurality of times in a beam scanning process. This increases an access wait time to some extent. Therefore, latency overheads need to be considered in designing the synchronization signals, to improve synchronization efficiency. Therefore, how to improve synchronization efficiency becomes a technical problem to be resolved urgently in the 5th generation communication.

### SUMMARY

This application provides a signal transmission method and apparatus, to improve synchronization efficiency. The invention is defined by the appended independent claims. Dependent claims constitute embodiments of the invention. Any other subject-matter falling outside the scope of the claims is to be regarded as an example not in accordance with the invention.

According to a first aspect, a signal transmission method is provided, including:
sending a first synchronization signal on a first time-frequency resource, where the first time-frequency resource includes a plurality of first frequency units in a first time unit; and
sending a second synchronization signal on a second time-frequency resource, where the second time-frequency resource includes a plurality of second frequency units in the first time unit, and the plurality of first frequency units alternate with the plurality of second frequency units in frequency domain.

In this embodiment of this application, the plurality of first frequency units for sending the first synchronization signal alternate with the plurality of second frequency units for sending the second synchronization signal in frequency domain. In this way, the first synchronization signal and the second synchronization signal may be evenly transmitted within a synchronization bandwidth. This can reduce a transmission latency of the synchronization signals, improve accuracy of frequency offset step estimation based on the synchronization signals, and improve synchronization efficiency.

In some possible implementations, both the first time-frequency resource and the second time-frequency resource are of a comb structure.

In some possible implementations, both a frequency range of the first time-frequency resource and a frequency range of the second time-frequency resource cover a synchronization bandwidth.

In some possible implementations, the time unit may represent a time domain resource of a transmission signal, for example, an OFDM symbol.

In some possible implementations, the first synchronization signal may be a PSS, and the second synchronization signal may be an SSS.

In some possible implementations, a length of the first synchronization signal and a length of the second synchronization signal may be longer than a length of the PSS and a length of the SSS in LTE, respectively.

In some possible implementations, the method further includes:
generating the first synchronization signal; and
generating the second synchronization signal.

In some possible implementations, the sending a first synchronization signal on a first time-frequency resource includes:
sending a sequence of the first synchronization signal on each of the plurality of first frequency units; and
the sending a second synchronization signal on a second time-frequency resource includes:
   sending a sequence of the second synchronization signal on each of the plurality of second frequency units.

In some possible implementations, one first frequency unit and one second frequency unit that are adjacent to each other may be referred to as a minimum synchronization bandwidth. In this way, a specific terminal device that does not support an entire synchronization bandwidth may detect synchronization signals on one or several minimum synchronization bandwidths, to implement a basic synchronization function. A terminal device that supports an entire synchronization bandwidth may detect synchronization signals on the entire synchronization bandwidth, to implement a synchronization function.

In some possible implementations, a frequency domain width of the first frequency unit is a frequency domain width occupied by the sequence of the first synchronization signal, and a frequency domain width of the second frequency unit is a frequency domain width occupied by the sequence of the second synchronization signal.

In some possible implementations, the sending a first synchronization signal on a first time-frequency resource includes:
sending different parts of a sequence of the first synchronization signal on different first frequency units of the plurality of first frequency units; and
the sending a second synchronization signal on a second time-frequency resource includes:
   sending different parts of a sequence of the second synchronization signal on different second frequency units of the plurality of second frequency units.

In some possible implementations, a frequency domain width of the first frequency unit is a first predefined frequency domain width, and a frequency domain width of the second frequency unit is a second predefined frequency domain width.

In some possible implementations, the sequence used by the first synchronization signal may be longer than that used by the PSS in the LTE. The longer sequence may be a long sequence, or a sequence generated from a same sequence or different sequences through combination. The same sequence or the different sequences may have a same length or different lengths. Similarly, the sequence used by the second synchronization signal may be longer than that used by the SSS in the LTE. The longer sequence may be a long sequence, or a sequence generated from a same sequence or different sequences through combination. The same sequence or the different sequences may have a same length or different lengths.

In some possible implementations, the sequence used by the first synchronization signal is used to indicate a sending manner of the first synchronization signal and the second synchronization signal.

According to a second aspect, a signal transmission method is provided, including:
receiving a first synchronization signal on a first time-frequency resource, where the first time-frequency resource includes a plurality of first frequency units in a first time unit; and
receiving a second synchronization signal on a second time-frequency resource, where the second time-frequency resource includes a plurality of second frequency units in the first time unit, and the plurality of first frequency units alternate with the plurality of second frequency units in frequency domain.

In this embodiment of this application, the plurality of first frequency units for sending the first synchronization signal alternate with the plurality of second frequency units for sending the second synchronization signal in frequency domain. In this way, the first synchronization signal and the second synchronization signal may be evenly transmitted within a synchronization bandwidth. This can reduce a transmission latency of the synchronization signals, improve accuracy of frequency offset step estimation based on the synchronization signals, and improve synchronization efficiency.

In some possible implementations, both the first time-frequency resource and the second time-frequency resource are of a comb structure.

In some possible implementations, both a frequency range of the first time-frequency resource and a frequency range of the second time-frequency resource cover a synchronization bandwidth.

In some possible implementations, the method further includes:
performing downlink communication link synchronization based on the first synchronization signal and the second synchronization signal.

In some possible implementations, the receiving a first synchronization signal on a first time-frequency resource includes:
receiving a sequence of the first synchronization signal on each of the plurality of first frequency units; and
the receiving a second synchronization signal on a second time-frequency resource includes:
   receiving a sequence of the second synchronization signal on each of the plurality of second frequency units.

In some possible implementations, a frequency domain width of the first frequency unit is a frequency domain width occupied by the sequence of the first synchronization signal, and a frequency domain width of the second frequency unit is a frequency domain width occupied by the sequence of the second synchronization signal.

In some possible implementations, the receiving a first synchronization signal on a first time-frequency resource includes:
receiving different parts of a sequence of the first synchronization signal on different first frequency units of the plurality of first frequency units; and
the receiving a second synchronization signal on a second time-frequency resource includes:
   receiving different parts of a sequence of the second synchronization signal on different second frequency units of the plurality of second frequency units.

In some possible implementations, a frequency domain width of the first frequency unit is a first predefined frequency domain width, and a frequency domain width of the second frequency unit is a second predefined frequency domain width.

In some possible implementations, the method further includes:
determining a sending manner of the first synchronization signal and the second synchronization signal based on the sequence used by the first synchronization signal.

According to a third aspect, a signal transmission apparatus is provided, including a processor and a transceiver, and can perform the method according to the first aspect or any possible implementation of the first aspect.

According to a fourth aspect, a signal transmission apparatus is provided, including a processor and a transceiver, and can perform the method according to the second aspect or any possible implementation of the second aspect.

According to a fifth aspect, a computer storage medium is provided. The computer storage medium stores program code, and the program code may be used to instruct to perform the method according to the first aspect or the second aspect or any possible implementation of the first aspect or the second aspect.

According to a sixth aspect, a computer program product including an instruction is provided. When the computer program product is run on a computer, the computer is enabled to perform the method according to the first aspect or the second aspect or any possible implementation of the first aspect or the second aspect.

### BRIEF DESCRIPTION OF DRAWINGS

FIG. 1 is a schematic diagram of a communications system applied to an embodiment of this application;
FIG. 2 is a schematic diagram of a location allocation mode of a PSS and an SSS in different duplex modes in a 4G system;
FIG. 3 is a schematic flowchart of a signal transmission method according to an embodiment of this application;
FIG. 4 is a schematic diagram of a time-frequency resource of a transmission signal according to an embodiment of this application;
FIG. 5 is a schematic diagram of a transmission signal according to an embodiment of this application;
FIG. 6 is a schematic diagram of a transmission signal according to another embodiment of this application;
FIG. 7 is a schematic block diagram of a signal transmission apparatus according to an embodiment of this application; and
FIG. 8 is a schematic block diagram of a signal transmission apparatus according to another embodiment of this application.

### DESCRIPTION OF EMBODIMENTS

The following describes technical solutions in this application with reference to the accompanying drawings.

Terms such as "component", "module", and "system" used in this specification are used to indicate computer-related entities, hardware, firmware, combinations of hardware and software, software, or software being executed. For example, a component may be, but is not limited to, a process that is run on a processor, a processor, an object, an executable file, a thread of execution, a program, and/or a computer. As shown in figures, both a computing device and an application that are run on a computing device may be components. One or more components may reside within a process and/or a thread of execution, and a component may be located on one computer and/or distributed between two or more computers. In addition, these components may be executed from various computer-readable mediums that store various data structures. For example, the components may communicate by using a local and/or remote process and according to, for example, a signal having one or more data packets (for example, data from two components interacting with another component in a local system, a distributed system, and/or across a network such as the Internet interacting with other systems by using the signal).

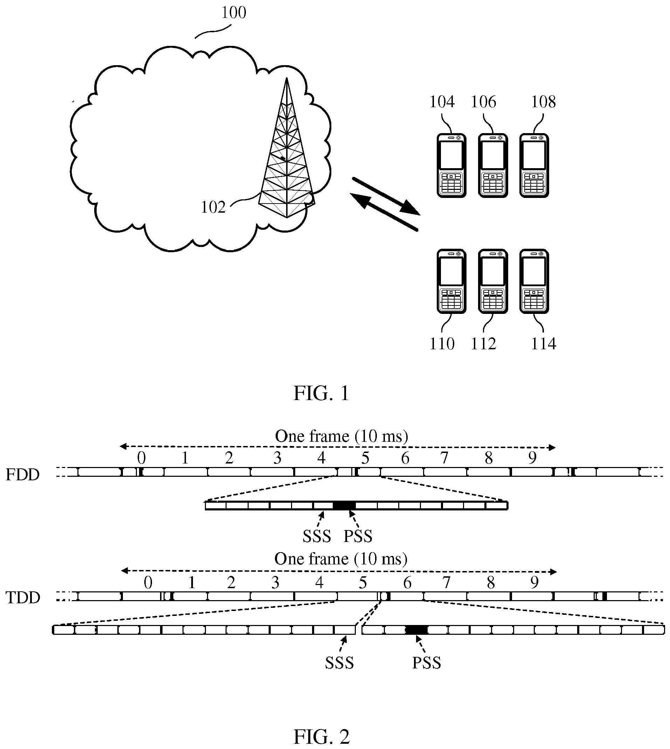

FIG. 1 is a schematic diagram of a communications system applied to an embodiment of this application. As shown in FIG. 1, a network 100 may include a network device 102 and terminal devices 104, 106, 108, 110, 112 and 114. The network device and the terminal devices are wirelessly connected. It should be understood that an example in which the network includes one network device is used in FIG. 1 for description, but this embodiment of this application is not limited thereto. For example, the network may also include more network devices. Similarly, the network may also include more terminal devices, and the network device may also include another device.

This specification describes the embodiments with reference to a terminal device. The terminal device may also be referred to user equipment (User Equipment, UE), an access terminal, a subscriber unit, a subscriber station, a mobile station, a mobile station, a remote station, a remote terminal, a mobile device, a user terminal, a terminal, a wireless communications device, a user agent, or a user apparatus. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (Public Land Mobile Network, PLMN), or the like.

This specification describes the embodiments with reference to a network device. The network device may be a device configured to communicate with a terminal device. The network device may be a base transceiver station (Base Transceiver Station, BTS) in a global system for mobile communications (Global System of Mobile communication, GSM) or code division multiple access (Code Division Multiple Access, CDMA), or may be a NodeB (NodeB, NB) in a wideband code division multiple access (Wideband Code Division Multiple Access, WCDMA) system, or may be an evolved NodeB (Evolutional NodeB, eNB or eNodeB) in an LTE system, or may be a radio controller in a cloud radio access network (Cloud Radio Access Network, CRAN) scenario. Alternatively, the network device may be a relay station, an access point, a vehicle-mounted device, a wearable device, or a network device in a future 5G network, or a network device in a future evolved PLMN network, or the like.

Currently, a TDM mode is used for a PSS and an SSS. Both the PSS and the SSS occupy an entire synchronization bandwidth. For example, FIG. 2 shows a frame location allocation mode of the PSS and the SSS in a frequency division duplex (Frequency Division Duplex, FDD) mode and a time division duplex (time division duplex, TDD) mode in an existing 4G system. In the FDD mode, the PSS is transmitted in a subframe 0 and a subframe 5, and the SSS is located in the first symbol before the PSS. In the TDD mode, the PSS is transmitted in a subframe 1 and a subframe 6, and the SSS is located in the third symbol before the PSS. In the existing 4G system, a synchronization bandwidth represents subcarriers near a center frequency of the system, for example, six resource blocks (Resource Block, RB). The PSS and the SSS are located in different symbols on the synchronization bandwidth in the TDM mode.

In this embodiment of this application, a definition of the synchronization bandwidth may be similar to that in the 4G system, or may be different from that in the 4G system. In other words, a new definition may be used in a future communications system. This is not limited in this embodiment of this application.

Embodiments of this application provide a synchronization signal solution suitable for next-generation communication, to improve synchronization efficiency. The following describes in detail the technical solutions in the embodiments of this application.

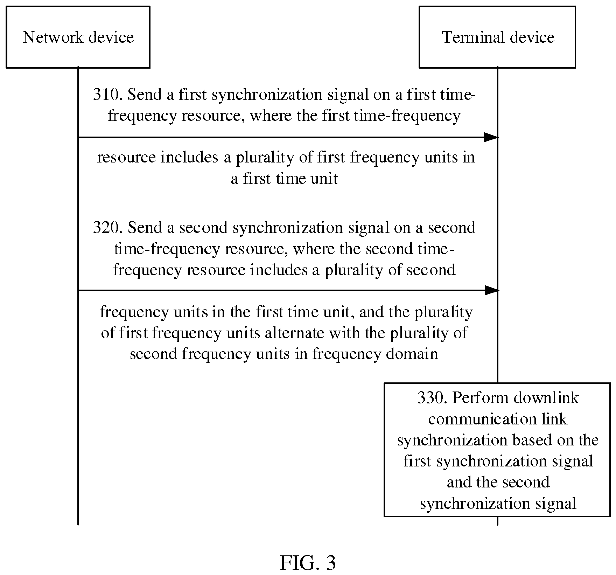

FIG. 3 is a schematic flowchart of a signal transmission method according to an embodiment of this application. In FIG. 3, a network device may be the network device 102 in FIG. 1, and a terminal device may be a terminal device in the terminal devices 104, 106, 108, 110, 112, and 114 in FIG. 1. Certainly, a quantity of network devices and a quantity of terminal devices in an actual system may not be limited to an example given in this embodiment or other embodiments, and details are not described below again.

310. The network device sends a first synchronization signal on a first time-frequency resource, where the first time-frequency resource includes a plurality of first frequency units in a first time unit.

320. The network device sends a second synchronization signal on a second time-frequency resource, where the second time-frequency resource includes a plurality of second frequency units in the first time unit, and the plurality of first frequency units alternate with the plurality of second frequency units in frequency domain.

In this embodiment of this application, the first synchronization signal and the second synchronization signal are sent on different frequency units in the first time unit. To be specific, the first synchronization signal and the second synchronization signal are sent in a frequency division multiplexing (Frequency Division Multiplexing, FDM) mode. Further, the plurality of first frequency units for sending the first synchronization signal alternate with the plurality of second frequency units for sending the second synchronization signal in frequency domain. In other words, two first/second frequency units are separated by a second/first frequency unit.

In this embodiment of this application, frequency domain widths of different first frequency units may be the same or different. Frequency domain widths of different second frequency units may be the same or different. A frequency domain width of the first frequency unit and a frequency domain width of the second frequency unit may be the same or different. This not limited in this embodiment of this application.

Optionally, in an embodiment of this application, both the first time-frequency resource and the second time-frequency resource are of a comb structure.

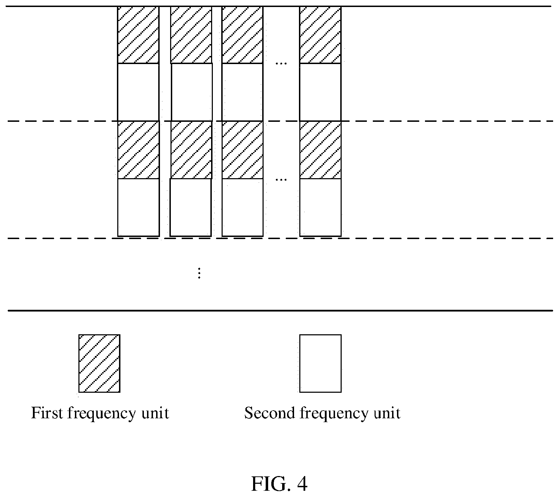

For example, as shown in FIG. 4, one second frequency unit is between two first frequency units of the first time-frequency resource, and one first frequency unit is between two second frequency units of the second time-frequency resource. In this way, both the first time-frequency resource and the second time-frequency resource are of a comb structure.

In this embodiment of this application, the time unit may represent a time domain resource of a transmission signal, for example, an orthogonal frequency division multiplexing (Orthogonal Frequency Division Multiplexing, OFDM) symbol, or another unit that represents a time domain resource. This is not limited in this embodiment of this application. In addition, a name of the time unit is not limited in this embodiment of this application. In other words, in a future communications system, a name in the future communications system may be used for the time unit.

Optionally, in an embodiment of this application, both a frequency range of the first time-frequency resource and a frequency range of the second time-frequency resource cover a synchronization bandwidth.

Specifically, the plurality of first frequency units alternate with the plurality of second frequency units in frequency domain. In this way, the plurality of first frequency units and the plurality of second frequency units may occupy the entire synchronization bandwidth. In other words, although the second frequency unit is between the plurality of first frequency units, a frequency range covered by the plurality of first frequency units is still the same as the synchronization bandwidth, and a maximum difference is a frequency domain width of one second frequency unit. Similarly, a frequency range covered by the plurality of second frequency units is also the same as the synchronization bandwidth, and a maximum difference is a frequency domain width of one first frequency unit.

In this way, the first synchronization signal and the second synchronization signal may be evenly transmitted within the synchronization bandwidth, and this can improve accuracy of frequency offset step estimation based on the synchronization signals.

In this embodiment of this application, optionally, the first synchronization signal may be a PSS, and the second synchronization signal may be an SSS. It should be understood that a name of the synchronization signal is not limited in this embodiment of this application. In other words, in a future communications system, a name in the future communications system may be used for the synchronization signal.

Optionally, before sending the synchronization signals, the network device first generates the first synchronization signal and generates the second synchronization signal.

Optionally, in this embodiment of this application, a length of the first synchronization signal and a length of the second synchronization signal may be longer than a length of the PSS and a length of the SSS in LTE, respectively.

Optionally, in an embodiment of this application, a sequence of the first synchronization signal may be sent on each of the plurality of first frequency units; and
a sequence of the second synchronization signal may be sent on each of the plurality of second frequency units.

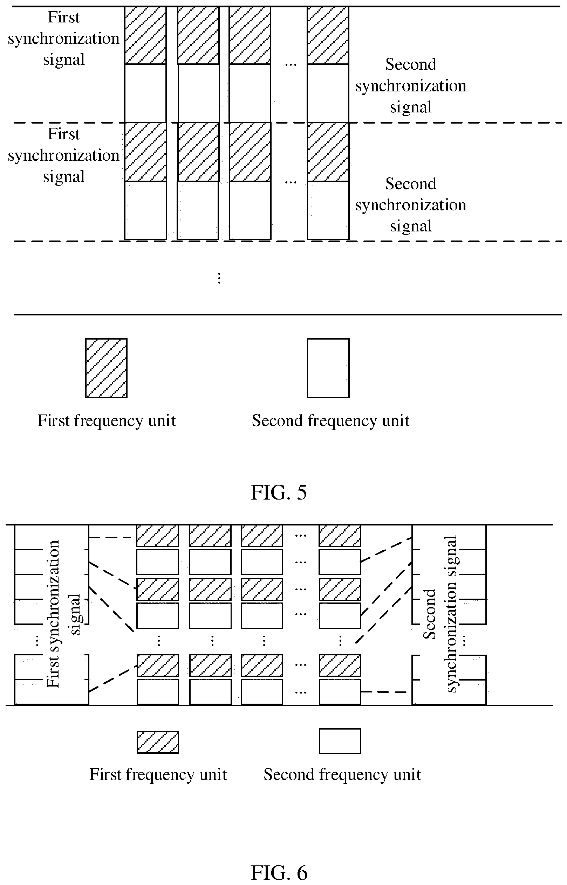

Specifically, as shown in FIG. 5, sequences of the first synchronization signal sent on the plurality of first frequency units are the same, in other words, the sequence of the first synchronization signal is repeatedly sent on the first frequency units. Sequences of the second synchronization signal sent on the plurality of second frequency units are the same, in other words, the sequence of the second synchronization signal is repeatedly sent on the second frequency units. In this way, the terminal device may implement a basic synchronization function by using the synchronization signals detected on one first frequency unit and one second frequency unit.

Optionally, one first frequency unit and one second frequency unit that are adjacent to each other may be referred to as a minimum synchronization bandwidth. In this way, a specific terminal device that does not support an entire synchronization bandwidth may detect synchronization signals on one or several minimum synchronization bandwidths, to implement a basic synchronization function. A terminal device that supports an entire synchronization bandwidth may detect synchronization signals on the entire synchronization bandwidth, to implement a synchronization function.

In this embodiment, optionally, a frequency domain width of the first frequency unit is a frequency domain width occupied by the sequence of the first synchronization signal, and a frequency domain width of the second frequency unit is a frequency domain width occupied by the sequence of the second synchronization signal.

In this way, the sequence of the first synchronization signal may be sent on one first frequency unit, and the sequence of the second synchronization signal may be sent on one second frequency unit. For example, the sequence of the first synchronization signal and the sequence of the second synchronization signal may be a sequence with a length of 62, and both the frequency domain width of the first frequency unit and the frequency domain width of the second frequency unit may be 6 RBs, to send the sequence of the first synchronization signal and the sequence of the second synchronization signal, respectively.

It should be understood that the sequence of the first synchronization signal and the sequence of the second synchronization signal may also be a sequence of another length. This is not limited in this embodiment of this application. Correspondingly, the frequency domain width of the first frequency unit and the frequency domain width of the second frequency unit may be determined by a length of the sequence of the first synchronization signal and a length of the sequence of the second synchronization signal, respectively.

Optionally, in an embodiment, the sequence of the first synchronization signal and the sequence of the second synchronization signal may be an existing PSS sequence and an existing SSS sequence, respectively. This is not limited in this embodiment of this application.

Optionally, in an embodiment of this application, different parts of a sequence of the first synchronization signal may be sent on different first frequency units of the plurality of first frequency units; and
different parts of a sequence of the second synchronization signal may be sent on different second frequency units of the plurality of second frequency units.

Specifically, as shown in FIG. 6, the different parts of the sequence of the first synchronization signal are sent on the plurality of first frequency units, a part of the sequence of the first synchronization signal is sent on each first frequency unit, and signals sent on the plurality of first frequency units constitute the sequence of the first synchronization signal. Similarly, the different parts of the sequence of the second synchronization signal are sent on the plurality of second frequency units, a part of the sequence of the second synchronization signal is sent on each second frequency unit, and signals sent on the plurality of second frequency units constitute the sequence of the second synchronization signal. In this way, when long sequences are used for the synchronization signals, the synchronization signals may be evenly transmitted within the synchronization bandwidth, and this can improve accuracy of frequency offset step estimation based on the synchronization signals.

In this embodiment, optionally, a frequency domain width of the first frequency unit is a first predefined frequency domain width, and a frequency domain width of the second frequency unit is a second predefined frequency domain width.

Specifically, a length of the part of the sequence of the first synchronization signal sent on each first frequency unit may be a predetermined length, in other words, the sequence of the first synchronization signal is divided into several parts for sending, and a length of each part may be preconfigured. Similarly, a length of the part of the sequence of the second synchronization signal sent on each second frequency unit may be a predetermined length, in other words, the sequence of the second synchronization signal is divided into several parts for sending, and a length of each part may be preconfigured. Correspondingly, the frequency domain width of the first frequency unit and the frequency domain width of the second frequency unit may correspond to the length of the part of the sequence of the first synchronization signal and the length of the part of the sequence of the second synchronization signal, respectively.

Optionally, in this embodiment of this application, the sequence used by the first synchronization signal may be longer than that used by the PSS in the LTE. The longer sequence may be a long sequence, or a sequence generated from a same sequence or different sequences through combination. The same sequence or the different sequences may have a same length or different lengths. Similarly, the sequence used by the second synchronization signal may be longer than that used by the SSS in the LTE. The longer sequence may be a long sequence, or a sequence generated from a same sequence or different sequences through combination. The same sequence or the different sequences may have a same length or different lengths.

It should be understood that the manners shown in FIG. 5 and FIG. 6 may also be combined for implementation. For example, the sequences of the synchronization signals may be sent on a plurality of frequency units in a part of the synchronization bandwidth according to the manner shown in FIG. 6, and are repeated on a plurality of parts of the synchronization bandwidth. This combination manner shall also fall within the scope of the embodiments of this application.

Optionally, the network device may indicate a sending manner of the synchronization signals, for example, indicating whether to use the manner shown in FIG. 5 or the manner shown in FIG. 6.

Optionally, in this embodiment, the sequence used by the first synchronization signal is used to indicate a sending manner of the first synchronization signal and the second synchronization signal.

Correspondingly, the terminal device determines the sending manner of the first synchronization signal and the second synchronization signal based on the sequence used by the first synchronization signal.

For example, a quantity of local sequences of the first synchronization signal may be increased, and different sequences are used to indicate different sending manners. For example, currently, three ZC sequences are used as local sequences for an LTE PSS. Root indexes (root) of the three ZC sequences are [25 29 34], and are used to distinguish between cell identifiers (Cell ID) [0 1 2]. Three additional ZC sequences may be added, and each cell ID corresponds to two ZC local sequences, to distinguish between two different sending manners of the synchronization signals.

It should be understood that the foregoing indication manner is merely an example, and a specific indication manner is not limited in this embodiment of this application. In addition, the sending manner of the synchronization signals may also be preconfigured. In this way, the network device no longer needs to indicate the sending manner to the terminal device.

330. The terminal device performs downlink communication link synchronization based on the first synchronization signal and the second synchronization signal.

The terminal device receives the first synchronization signal on the first time-frequency resource, receives the second synchronization signal on the second time-frequency resource, and performs the downlink communication link synchronization based on the first synchronization signal and the second synchronization signal.

Optionally, if the first synchronization signal and the second synchronization signal are sent in the manner shown in FIG. 5, the terminal device may receive the sequence of the first synchronization signal on each of the plurality of first frequency units, and receives the sequence of the second synchronization signal on each of the plurality of second frequency units. The terminal device may implement a basic synchronization function based on synchronization signals detected on one first frequency unit and one second frequency unit, and implement a complete synchronization function based on synchronization signals detected on the entire synchronization bandwidth.

Optionally, if the first synchronization signal and the second synchronization signal are sent in the manner shown in FIG. 6, the terminal device may receive the different parts of the sequence of the first synchronization signal on the different first frequency units of the plurality of first frequency units, and receives the different parts of the sequence of the second synchronization signal on the different second frequency units of the plurality of second frequency units. Signals received on the plurality of first frequency units constitute the sequence of the first synchronization signal, and signals received on the plurality of second frequency units constitute the sequence of the second synchronization signal. The terminal device implements a complete synchronization function based on synchronization signals detected on the entire synchronization bandwidth.

Correspondingly, the terminal device determines the sending manner of the first synchronization signal and the second synchronization signal based on the sequence used by the first synchronization signal. For example, the terminal device determines which manner is to be used: the manner in which the entire sequences of the synchronization signals are sent on each frequency unit in FIG. 5 or the manner in which the different parts of the sequences of the synchronization signals are sent on the different frequency units in FIG. 6.

In this embodiment of this application, the plurality of first frequency units for sending the first synchronization signal alternate with the plurality of second frequency units for sending the second synchronization signal in frequency domain. In this way, the first synchronization signal and the second synchronization signal may be evenly transmitted within the synchronization bandwidth. This can reduce a transmission latency of the synchronization signals, improve accuracy of frequency offset step estimation based on the synchronization signals, and improve synchronization efficiency.

It should be understood that the specific examples in the embodiments of this application are merely intended to help a person skilled in the art better understand the embodiments of this application, rather than limit the scope of the embodiments of this application.

It should be understood that sequence numbers of the foregoing processes do not mean execution sequences in various embodiments of this application. The execution sequences of the processes should be determined based on functions and internal logic of the processes, but should not be construed as any limitation on the implementation processes in the embodiments of this application.

The signal transmission method according to the embodiments of this application is described in detail above. The following describes a signal transmission apparatus according to embodiments of this application.

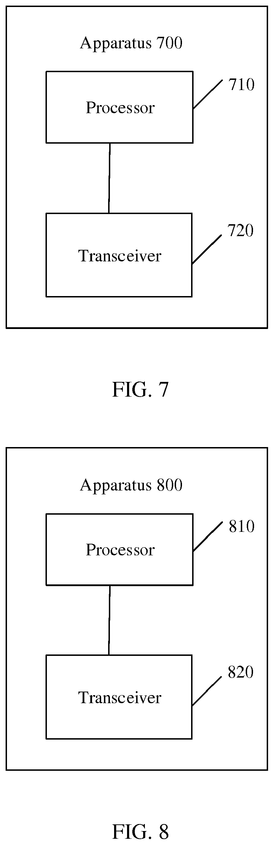

FIG. 7 is a schematic block diagram of a signal transmission apparatus 700 according to an embodiment of this application. The apparatus 700 may be a network device.

It should be understood that the apparatus 700 may correspond to the network device in the method embodiments, and may have any function of the network device in the method.

As shown in FIG. 7, the apparatus 700 includes a processor 710 and a transceiver 720.

The processor 710 is configured to generate a first synchronization signal and a second synchronization signal.

The transceiver 720 is configured to send the first synchronization signal on a first time-frequency resource, where the first time-frequency resource includes a plurality of frequency units in a first time unit, and send the second synchronization signal on a second time-frequency resource, where the second time-frequency resource includes a plurality of second frequency units in the first time unit, and the plurality of first frequency units alternate with the plurality of second frequency units in frequency domain.

Optionally, in an embodiment of this application, both the first time-frequency resource and the second time-frequency resource are of a comb structure.

Optionally, in an embodiment of this application, a frequency range of the first time-frequency resource and a frequency range of the second time-frequency resource cover a synchronization bandwidth.

Optionally, in an embodiment of this application, the transceiver 720 is configured to:
send a sequence of the first synchronization signal on each of the plurality of first frequency units; and
send a sequence of the second synchronization signal on each of the plurality of second frequency units.

Optionally, in an embodiment of this application, a frequency domain width of the first frequency unit is a frequency domain width occupied by the sequence of the first synchronization signal, and a frequency domain width of the second frequency unit is a frequency domain width occupied by the sequence of the second synchronization signal.

Optionally, in an embodiment of this application, the transceiver 720 is configured to:
send different parts of a sequence of the first synchronization signal on different first frequency units of the plurality of first frequency units; and
send different parts of a sequence of the second synchronization signal on different second frequency units of the plurality of second frequency units.

Optionally, in an embodiment of this application, a frequency domain width of the first frequency unit is a first predefined frequency domain width, and a frequency domain width of the second frequency unit is a second predefined frequency domain width.

Optionally, in an embodiment of this application, the sequence used by the first synchronization signal is used to indicate a sending manner of the first synchronization signal and the second synchronization signal.

FIG. 8 is a schematic block diagram of a signal transmission apparatus 800 according to another embodiment of this application. The apparatus 800 may be a terminal device.

It should be understood that the apparatus 800 may correspond to the terminal device in the method embodiments, and may have any function of the terminal device in the method.

As shown in FIG. 8, the apparatus 800 includes a processor 810 and a transceiver 820.

The transceiver 820 is configured to receive a first synchronization signal on a first time-frequency resource, where the first time-frequency resource includes a plurality of frequency units in a first time unit, and receive a second synchronization signal on a second time-frequency resource, where the second time-frequency resource includes a plurality of second frequency units in the first time unit, and the plurality of first frequency units alternate with the plurality of second frequency units in frequency domain.

The processor 810 is configured to perform downlink communication link synchronization based on the first synchronization signal and the second synchronization signal.

Optionally, in an embodiment of this application, both the first time-frequency resource and the second time-frequency resource are of a comb structure.

Optionally, in an embodiment of this application, a frequency range of the first time-frequency resource and a frequency range of the second time-frequency resource cover a synchronization bandwidth.

Optionally, in an embodiment of this application, the transceiver 820 is configured to:
receive a sequence of the first synchronization signal on each of the plurality of first frequency units; and
receive a sequence of the second synchronization signal on each of the plurality of second frequency units.

Optionally, in an embodiment of this application, a frequency domain width of the first frequency unit is a frequency domain width occupied by the sequence of the first synchronization signal, and a frequency domain width of the second frequency unit is a frequency domain width occupied by the sequence of the second synchronization signal.

Optionally, in an embodiment of this application, the transceiver 820 is configured to:
receive different parts of a sequence of the first synchronization signal on different first frequency units of the plurality of first frequency units; and
receive different parts of a sequence of the second synchronization signal on different second frequency units of the plurality of second frequency units.

Optionally, in an embodiment of this application, a frequency domain width of the first frequency unit is a first predefined frequency domain width, and a frequency domain width of the second frequency unit is a second predefined frequency domain width.

Optionally, in an embodiment of this application, the processor 810 is further configured to:
determine a sending manner of the first synchronization signal and the second synchronization signal based on the sequence used by the first synchronization signal.

It should be understood that the processor 710 and/or the processor 810 in the embodiments of this application may be implemented by using a processing unit or a chip. Optionally, the processing unit may include a plurality of units during an implementation process.

It should be understood that the transceiver 720 or the transceiver 820 in the embodiments of this application may be implemented by using a transceiver unit or a chip. Optionally, the transceiver 720 or the transceiver 820 may include a transmitter or a receiver, or may include a transmitting unit or a receiving unit.

Optionally, the network device or the terminal device may further include a memory, the memory may store program code, and the processor invokes the program code stored in the memory to implement a corresponding function of the network device or the terminal device.

The apparatus in the implementation of this application may be a field-programmable gate array (Field-Programmable Gate Array, FPGA), an application-specific integrated chip (Application Specific Integrated Circuit, ASIC), or may also be a system on chip (System on Chip, SoC), a central processor unit (Central Processor Unit, CPU), a network processor (Network Processor, NP), a digital signal processor (Digital Signal Processor, DSP), a micro controller (Micro Controller Unit, MCU), or may be a programmable logic device (Programmable Logic Device, PLD), or another integrated chip.

An embodiment of this application further provides a communications system, including the network device according to the foregoing network device embodiment and the terminal device according to the terminal device embodiment.

All or some of the foregoing embodiments may be implemented by using software, hardware, firmware, or any combination thereof. When being implemented by using software, all or some of the embodiments may be implemented in a form of a computer program product. The computer program product includes one or more computer instructions. When the computer program instructions are loaded and executed on a computer, some or all of the procedures or functions according to the embodiments of this application are generated. The computer may be a general purpose computer, a special purpose computer, a computer network, or other programmable apparatuses. The computer instructions may be stored in a computer readable storage medium or transmitted from a computer readable storage medium to another computer readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any available medium accessible to the computer, or a data storage device, such as a server or a data center integrating one or more available media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

It should be understood that, the term "and/or" in the embodiments of this application describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

A person of ordinary skill in the art may be aware that units and algorithm steps in the examples described with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It may be clearly understood by a person skilled in the art that for the purpose of convenient and brief description, for a detailed working process of the described system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, the unit division is merely logical function division. There may be another division manner during actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electrical, mechanical, or another form.

The units described as separate parts may or may not be physically separate. Parts displayed as units may or may not be physical units, and may be located in one position, or may be distributed on a plurality of network units. Some or all of the units may be selected based on an actual requirement to achieve the objectives of the solutions of the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps in the methods in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal transmission method, comprising:
sending (310) a first synchronization signal on a first time-frequency resource, wherein the first time-frequency resource comprises a plurality of first frequency units in a first time unit; and
sending (320) a second synchronization signal on a second time-frequency resource, wherein the second time-frequency resource comprises a plurality of second frequency units in the first time unit, and the plurality of first frequency units alternate with the plurality of second frequency units in frequency domain.

2. The method according to claim 1, wherein both the first time-frequency resource and the second time-frequency resource are of a comb structure.

3. The method according to claim 1 or 2, wherein both a frequency range of the first time-frequency resource and a frequency range of the second time-frequency resource cover a synchronization bandwidth.

4. The method according to any one of claims 1 to 3, wherein the method further comprises:
generating the first synchronization signal; and
generating the second synchronization signal.

5. The method according to any one of claims 1 to 4, wherein the sending a first synchronization signal on a first time-frequency resource comprises:
sending a sequence of the first synchronization signal on each of the plurality of first frequency units; and
the sending a second synchronization signal on a second time-frequency resource comprises:
sending a sequence of the second synchronization signal on each of the plurality of second frequency units.

6. The method according to claim 5, wherein a frequency domain width of a first frequency unit out of the plurality of the frequency units is a frequency domain width occupied by the sequence of the first synchronization signal, and a frequency domain width of a second frequency unit out of the plurality of the frequency units is a frequency domain width occupied by the sequence of the second synchronization signal.

7. The method according to any one of claims 1 to 4, wherein the sending a first synchronization signal on a first time-frequency resource comprises:
sending different parts of a sequence of the first synchronization signal on different first frequency units of the plurality of first frequency units; and
the sending a second synchronization signal on a second time-frequency resource comprises:
sending different parts of a sequence of the second synchronization signal on different second frequency units of the plurality of second frequency units.

8. The method according to claim 7, wherein a frequency domain width of a first frequency unit out of the plurality of the frequency units is a first predefined frequency domain width, and a frequency domain width of a second frequency unit out of the plurality of the frequency units is a second predefined frequency domain width.

9. A signal transmission method, comprising:
receiving a first synchronization signal on a first time-frequency resource, wherein the first time-frequency resource comprises a plurality of first frequency units in a first time unit; and
receiving a second synchronization signal on a second time-frequency resource, wherein the second time-frequency resource comprises a plurality of second frequency units in the first time unit, and the plurality of first frequency units alternate with the plurality of second frequency units in frequency domain;
performing downlink communication link synchronization based on the first synchronization signal and the second synchronization signal.

10. The method according to claim 9, wherein both the first time-frequency resource and the second time-frequency resource are of a comb structure.

11. The method according to claim 9 or 10, wherein both a frequency range of the first time-frequency resource and a frequency range of the second time-frequency resource cover a synchronization bandwidth.

12. A signal transmission apparatus (700), comprising a processor (710) and a transceiver (720), wherein
the processor is configured to generate a first synchronization signal and a second synchronization signal; and
the transceiver is configured to send the first synchronization signal on a first time-frequency resource, wherein the first time-frequency resource comprises a plurality of first frequency units in a first time unit, and send the second synchronization signal on a second time-frequency resource, wherein the second time-frequency resource comprises a plurality of second frequency units in the first time unit, and the plurality of first frequency units alternate with the plurality of second frequency units in frequency domain.

13. The apparatus according to claim 12, wherein both the first time-frequency resource and the second time-frequency resource are of a comb structure.

14. A signal transmission apparatus (800), comprising a processor (810) and a transceiver (820), wherein
the transceiver is configured to receive a first synchronization signal on a first time-frequency resource, wherein the first time-frequency resource comprises a plurality of first frequency units in a first time unit, and receive a second synchronization signal on a second time-frequency resource, wherein the second time-frequency resource comprises a plurality of second frequency units in the first time unit, and the plurality of first frequency units alternate with the plurality of second frequency units in frequency domain; and
the processor is configured to perform downlink communication link synchronization based on the first synchronization signal and the second synchronization signal.

15. The apparatus according to claim 14, wherein the transceiver is configured to:
receive a sequence of the first synchronization signal on each of the plurality of first frequency units; and
receive a sequence of the second synchronization signal on each of the plurality of second frequency units.

## Patentansprüche

1. Verfahren zur Signalübertragung, umfassend:
Senden (310) eines ersten Synchronisationssignals auf einer ersten Zeitfrequenzressource, wobei die erste Zeitfrequenzressource eine Vielzahl von ersten Frequenzeinheiten in einer ersten Zeiteinheit umfasst; und
Senden (320) eines zweiten Synchronisationssignals auf einer zweiten Zeitfrequenzressource, wobei die zweite Zeitfrequenzressource eine Vielzahl von zweiten Frequenzeinheiten in der ersten Zeiteinheit umfasst und wobei die Vielzahl von ersten Frequenzeinheiten mit der Vielzahl von zweiten Frequenzeinheiten in einer Frequenzdomäne abwechselt.

2. Verfahren nach Anspruch 1, wobei sowohl die erste Zeitfrequenzressource als auch die zweite Zeitfrequenzressource eine Kammstruktur haben.

3. Verfahren nach Anspruch 1 oder 2, wobei sowohl ein Frequenzbereich der ersten Zeitfrequenzressource als auch ein Frequenzbereich der zweiten Zeitfrequenzressource eine Synchronisationsbandbreite abdecken.

4. Verfahren nach einem der Ansprüche 1 bis 3, wobei das Verfahren ferner Folgendes umfasst:
Erzeugen des ersten Synchronisationssignals; und
Erzeugen des zweiten Synchronisationssignals.

5. Verfahren nach einem der Ansprüche 1 bis 4, wobei das Senden eines ersten Synchronisationssignals auf einer ersten Zeitfrequenzressource Folgendes umfasst:
Senden einer Sequenz des ersten Synchronisationssignals auf jeder der Vielzahl von ersten Frequenzeinheiten; und
wobei das Senden eines zweiten Synchronisationssignals auf einer zweiten Zeitfrequenzressource Folgendes umfasst:
Senden einer Sequenz des zweiten Synchronisationssignals auf jeder der Vielzahl von zweiten Frequenzeinheiten.

6. Verfahren nach Anspruch 5, wobei eine Frequenzdomänenbreite einer ersten Frequenzeinheit aus der Vielzahl der Frequenzeinheiten eine Frequenzdomänenbreite ist, die durch die Sequenz des ersten Synchronisationssignals belegt ist, und wobei eine Frequenzdomänenbreite einer zweiten Frequenzeinheit aus der Vielzahl der Frequenzeinheiten eine Frequenzdomänenbreite ist, die durch die Sequenz des zweiten Synchronisationssignals belegt ist.

7. Verfahren nach einem der Ansprüche 1 bis 4, wobei das Senden eines ersten Synchronisationssignals auf einer ersten Zeitfrequenzressource Folgendes umfasst:
Senden unterschiedlicher Sequenzteile des ersten Synchronisationssignals auf unterschiedlichen ersten Frequenzeinheiten der Vielzahl von ersten Frequenzeinheiten; und
wobei das Senden eines zweiten Synchronisationssignals auf einer zweiten Zeitfrequenzressource Folgendes umfasst:
Senden unterschiedlicher Sequenzteile des zweiten Synchronisationssignals auf unterschiedlichen zweiten Frequenzeinheiten der Vielzahl von zweiten Frequenzeinheiten.

8. Verfahren nach Anspruch 7, wobei eine Frequenzdomänenbreite einer ersten Frequenzeinheit aus der Vielzahl der Frequenzeinheiten eine erste vorbestimmte Frequenzdomänenbreite ist, und wobei eine Frequenzdomänenbreite einer zweiten Frequenzeinheit aus der Vielzahl der Frequenzeinheiten eine zweite vorbestimmte Frequenzdomänenbreite ist.

9. Signalübertragungsverfahren, umfassend:
Empfangen eines ersten Synchronisationssignals auf einer ersten Zeitfrequenzressource, wobei die erste Zeitfrequenzressource eine Vielzahl von ersten Frequenzeinheiten in einer ersten Zeiteinheit umfasst; und
Empfangen eines zweiten Synchronisationssignals auf einer zweiten Zeitfrequenzressource, wobei die zweite Zeitfrequenzressource eine Vielzahl von zweiten Frequenzeinheiten in der ersten Zeiteinheit umfasst, und wobei die Vielzahl von ersten Frequenzeinheiten mit der Vielzahl von zweiten Frequenzeinheiten in einer Frequenzdomäne abwechselt;
Durchführen von Downlink-Kommunikationsverbindungssynchronisation basierend auf dem ersten Synchronisationssignal und dem zweiten Synchronisationssignal.

10. Verfahren nach Anspruch 9, wobei sowohl die erste Zeitfrequenzressource als auch die zweite Zeitfrequenzressource eine Kammstruktur haben.

11. Verfahren nach Anspruch 9 oder 10, wobei sowohl ein Frequenzbereich der ersten Zeitfrequenzressource als auch ein Frequenzbereich der zweiten Zeitfrequenzressource eine Synchronisationsbandbreite abdecken.

12. Vorrichtung (700) zur Signalübertragung, umfassend einen Prozessor (710) und einen Sendempfänger (720), wobei
der Prozessor dazu konfiguriert ist, ein erstes Synchronisationssignal und ein zweites Synchronisationssignal zu erzeugen; und
wobei der Sendeempfänger dazu konfiguriert ist, das erste Synchronisationssignal auf einer ersten Zeitfrequenzressource zu senden, wobei die erste Zeitfrequenzressource eine Vielzahl von ersten Frequenzeinheiten in einer ersten Zeiteinheit umfasst, und dazu, das zweite Synchronisationssignal auf einer zweiten Zeitfrequenzressource zu senden, wobei die zweite Zeitfrequenzressource eine Vielzahl von zweiten Frequenzeinheiten in der ersten Zeiteinheit umfasst, und wobei die Vielzahl von ersten Frequenzeinheiten mit der Vielzahl von zweiten Frequenzeinheiten in einer Frequenzdomäne abwechselt.

13. Vorrichtung nach Anspruch 12, wobei sowohl die erste Zeitfrequenzressource als auch die zweite Zeitfrequenzressource eine Kammstruktur haben.

14. Vorrichtung zur Signalübertragung (800), umfassend einen Prozessor (810) und einen Sendeempfänger (820), wobei
der Sendempfänger dazu konfiguriert ist, ein erstes Synchronisationssignal auf einer ersten Zeitfrequenzressource zu empfangen, wobei die erste Zeitfrequenzressource eine Vielzahl von ersten Zeitfrequenzeinheiten in einer ersten Zeiteinheit umfasst, und dazu, ein zweites Synchronisationssignal auf einer zweiten Zeitfrequenzressource zu empfangen, wobei die zweite Zeitfrequenzressource eine Vielzahl von zweiten Frequenzeinheiten in der ersten Zeiteinheit umfasst, und wobei die Vielzahl von ersten Frequenzeinheiten mit der Vielzahl von zweiten Frequenzeinheiten in einer Frequenzdomäne abwechselt; und
wobei der Prozessor dazu konfiguriert ist, eine Downlink-Kommunikationsverbindungssynchronisation basierend auf dem ersten Synchronisationssignal und dem zweiten Synchronisationssignal durchzuführen.

15. Vorrichtung nach Anspruch 14, wobei der Sendeempfänger zu Folgendem konfiguriert ist:
Empfangen einer Sequenz des ersten Synchronisationssignals auf jedem der Vielzahl von ersten Frequenzeinheiten; und
Empfangen einer Sequenz des zweiten Synchronisationssignals auf jeder der Vielzahl von zweiten Frequenzeinheiten.

## Revendications

1. Procédé d'émission de signal comprenant :
l'envoi (310) d'un premier signal de synchronisation sur une première ressource temps-fréquence, dans lequel la première ressource temps-fréquence comprend une pluralité de premières unités fréquentielles dans une première unité temporelle ; et
l'envoi (320) d'un second signal de synchronisation sur une seconde ressource temps-fréquence, dans lequel la seconde ressource temps-fréquence comprend une pluralité de secondes unités fréquentielles dans la première unité temporelle, et la pluralité de premières unités fréquentielles s'alternent avec la pluralité de secondes unités fréquentielles dans un domaine fréquentiel.

2. Procédé selon la revendication 1, dans lequel à la fois la première ressource temps-fréquence et la seconde ressource temps-fréquence sont d'une structure en peigne.

3. Procédé selon la revendication 1 ou 2, dans lequel à la fois une plage de fréquences de la première ressource temps-fréquence et une plage de fréquences de la seconde ressource temps-fréquence couvrent une largeur de bande de synchronisation.

4. Procédé selon l'une quelconque des revendications 1 à 3, dans lequel le procédé comprend en outre :
la génération du premier signal de synchronisation ; et
la génération du second signal de synchronisation.

5. Procédé selon l'une quelconque des revendications 1 à 4, dans lequel l'envoi d'un premier signal de synchronisation sur une première ressource temps-fréquence comprend :
l'envoi d'une séquence du premier signal de synchronisation sur chacune de la pluralité de premières unités fréquentielles ; et
l'envoi d'un second signal de synchronisation sur une seconde ressource temps-fréquence comprend :
l'envoi d'une séquence du second signal de synchronisation sur chacune de la pluralité de secondes unités fréquentielles.

6. Procédé selon la revendication 5, dans lequel une largeur de domaine fréquentiel d'une première unité fréquentielle parmi la pluralité des unités fréquentielles est une largeur de domaine fréquentiel occupée par la séquence du premier signal de synchronisation, et une largeur de domaine fréquentiel d'une seconde unité fréquentielle parmi la pluralité des unités fréquentielles est une largeur de domaine fréquentiel occupée par la séquence du second signal de synchronisation.

7. Procédé selon l'une quelconque des revendications 1 à 4, dans lequel l'envoi d'un premier signal de synchronisation sur une première ressource temps-fréquence comprend :
l'envoi de parties différentes d'une séquence du premier signal de synchronisation sur des premières unités fréquentielles différentes de la pluralité de premières unités fréquentielles ; et
l'envoi d'un second signal de synchronisation sur une seconde ressource temps-fréquence comprend :
l'envoi de parties différentes d'une séquence du second signal de synchronisation sur des secondes unités fréquentielles différentes de la pluralité de secondes unités fréquentielles.

8. Procédé selon la revendication 7, dans lequel une largeur de domaine fréquentiel d'une première unité fréquentielle parmi la pluralité d'unités fréquentielles est une première largeur de domaine fréquentiel prédéterminée, et une largeur de domaine fréquentiel d'une seconde unité fréquentielle parmi la pluralité des unités fréquentielles est une seconde largeur de domaine fréquentiel prédéterminée.

9. Procédé d'émission de signal comprenant :
la réception d'un premier signal de synchronisation sur une première ressource temps-fréquence, dans lequel la première ressource temps-fréquence comprend une pluralité de premières unités fréquentielles dans une première unité temporelle ; et
la réception d'un second signal de synchronisation sur une seconde ressource temps-fréquence, dans lequel la seconde ressource temps-fréquence comprend une pluralité de secondes unités fréquentielles dans la première unité temporelle, et la pluralité de premières unités fréquentielles s'alternent avec la pluralité de secondes unités fréquentielles dans un domaine fréquentiel ;
l'exécution d'une synchronisation de liaison de communication de liaison descendante sur la base du premier signal de synchronisation et du second signal de synchronisation.

10. Procédé selon la revendication 9, dans lequel à la fois la première ressource temps-fréquence et la seconde ressource temps-fréquence sont d'une structure en peigne.

11. Procédé selon la revendication 9 ou 10, dans lequel à la fois une plage de fréquences de la première ressource temps-fréquence et une plage de fréquences de la seconde ressource temps-fréquence couvrent une largeur de bande de synchronisation.

12. Appareil d'émission de signal (700), comprenant un processeur (710) et un émetteur-récepteur (720), dans lequel
le processeur est configuré pour générer un premier signal de synchronisation et un second signal de synchronisation ; et
l'émetteur-récepteur est configuré pour envoyer le premier signal de synchronisation sur une première ressource temps-fréquence, dans lequel la première ressource temps-fréquence comprend une pluralité de premières unités fréquentielles dans une première unité temporelle, et envoyer le second signal de synchronisation sur une seconde ressource temps-fréquence, dans lequel la seconde ressource temps-fréquence comprend une pluralité de secondes unités fréquentielles dans la première unité temporelle, et la pluralité de premières unités fréquentielles s'alternent avec la pluralité de secondes unités fréquentielles dans un domaine fréquentiel.

13. Appareil selon la revendication 12, dans lequel à la fois la première ressource temps-fréquence et la seconde ressource temps-fréquence sont d'une structure en peigne.

14. Appareil d'émission de signal (800), comprenant un processeur (810) et un émetteur-récepteur (820), dans lequel
l'émetteur-récepteur est configuré pour recevoir un premier signal de synchronisation sur une première ressource temps-fréquence, dans lequel la première ressource temps-fréquence comprend une pluralité de premières unités fréquentielles dans une première unité temporelle, et recevoir un second signal de synchronisation sur une seconde ressource temps-fréquence, dans lequel la seconde ressource temps-fréquence comprend une pluralité de secondes unités fréquentielles dans la première unité temporelle, et la pluralité de premières unités fréquentielles s'alternent avec la pluralité de secondes unités fréquentielles dans un domaine fréquentiel ; et
le processeur est configuré pour effectuer une synchronisation de liaison de communication de liaison descendante sur la base du premier signal de synchronisation et du second signal de synchronisation.

15. Appareil selon la revendication 14, dans lequel l'émetteur-récepteur est configuré pour :
recevoir une séquence du premier signal de synchronisation sur chacune de la pluralité de premières unités fréquentielles ; et
recevoir une séquence du second signal de synchronisation sur chacune de la pluralité de secondes unités fréquentielles.
